# EUROPEAN PATENT APPLICATION

(11) **EP 1 542 392 A1**
(43) Date of publication of application: **15.06.2005**
(21) Application number: 03797619.8
(22) Date of filing: 17.09.2003
(51) Int. Cl.: H04L 9/32, H04L 9/08, G06F 15/00

(54) **DATA PROCESSING METHOD, PROGRAM THEREOF, AND DEVICE THEREOF**

(30) Priority: 19.09.2002 JP 2002273601
(71) Applicant: Sony Corporation, Tokyo 141-0001 (JP)
(72) Inventor: OMORI, Kazuo, Shinagawa-ku, Tokyo 141-0001 (JP); HONJO, Akira, Shinagawa-ku, Tokyo 141-0001 (JP); SUEYOSHI, Masahiro, Shinagawa-ku, Tokyo 141-0001 (JP); HANAKI, Naofumi, Shinagawa-ku, Tokyo 141-0001 (JP); TATENO, Kei, Shinagawa-ku, Tokyo 141-0001 (JP)
(74) Representative: Horner, David Richard
(86) International application number: PCT/JP2003/011803
(87) International publication number: WO 2004/028080

(57) **Abstract**

Synthetic key data hard to restore mutual authentication key data is generated by using the mutual authentication key data related to processing permitted to a user card 73 among processing relating SAM unit 9a and 9b. Then, the synthetic key data and key designation key data designating mutual authentication key data used for generating the synthetic data is written in the user card 73.

## Description

### TECHNICAL FIELD

The present invention relates to a data processing method for performing predetermined processing based on authentication results, a program of the same, and a device of the same.

### BACKGOUND ART

There is a system where an authenticating side (authenticating means) confirms the legitimacy of an authenticated side (means to be authenticated), then executes processing authorized to the authenticated side.

In such a system, for example, the authenticating side holds mutual authentication key data for all authenticated sides and selects the mutual authentication key data corresponding to an authenticating side to perform the mutual authentication for each authenticating side.

Further, when confirming the legitimacy of the means to be authenticated by the mutual authentication, the authenticating side specifies processing authorized to the means to be authenticated in advance based on a management table etc. and executes the specified processing.

In the above-explained conventional system, however, the authenticated side must hold the mutual authentication key data corresponding to all authenticating sides, so there is a problem that the management load of the mutual authentication key data is large.

Further, in the above-explained conventional system, it is necessary to specify the processing authorized to an authenticated side based on a management table separately from the mutual authentication, so there is the problem of a large load for preparation, management, etc. of the management table.

### DISCLOSURE OF THE INVENTION

The present invention is performed considering the according circumstances, and it has as its object to provide a data processing method enabling reduction of a processing load of the authenticating means when the authenticating means authenticates the means to be authenticated, then executes processing authorized to the means to be authenticated, a program of the same and a device of the same.

To attain the above object, a data processing method of a first invention is a data processing method providing first authentication use data used for authentication by means to be authenticated to the means to be authenticated when authenticating means holding key data uses the key data designated by the means to be authenticated holding the first authentication use data for encryption to generate second authentication use data, uses the second authentication use data to authenticate with the means to be authenticated, and performs processing related to the key data conditional on the authentication confirming that the first authentication use data and the second authentication use data are the same, wherein the data processing method on the first invention has a first step of generating the first authentication use data by using the key data related to the processing permitted to the means to be authenticated among processing relating to the authenticating means and performing the encryption, and a second step of providing the first authentication use data generated in the first step and key designation data designating the key data used in the first step to the means to be authenticated.

On the data processing method if the first invention, first, in the first step, the first authentication use data is generated by using the key data related to the processing permitted to the means to be authenticated among processing relating to the authenticating means for the encryption.

Then, in the second step, the first authentication use data generated in the first step and key designation data designating the key data used in the first step is provided to the means to be authenticated.

The data processing method of the first invention, preferably, writes the first authentication use data and the key designation data in an integrated circuit used by the means to be authenticated in the second step.

Further, the data processing method of the first invention, preferably, generates the first authentication use data by using the key data related to function of the authenticating means permitted by the means to be authenticated or an access to data held by the authenticating means.

Further, the data processing method of the first invention, preferably, has a third step by which the means to be authenticated provides the key designation data to the authenticating means, a fourth step by which the authenticating means generates the second authentication use data with the predetermined generation method by using the key data designated by the key designation data received in the third step, a fifth step by which the means to be authenticated authenticates by using the first authentication use data and the authenticating means authenticates by using the second authentication use data generated in the fourth step, and a sixth step by which the authenticating means executes processing related to the key data in response to an indication from the means to be authenticated when the authenticating means judges that the first authentication use data and the second authentication use data are the same by the authentication in the fifth step further.

A program of a second invention is a program executed by a data processing device providing first authentication use data used for authentication by means to be authenticated to the means to be authenticated when authenticating means holding key data uses the key data designated by the means to be authenticated holding the first authentication use data for encryption to generate second authentication use data, uses the second authentication use data to authenticate with the means to be authenticated, and performs processing related to the key data conditional on the authentication confirming that the first authentication use data and the second authentication use data are the same, the program has a first step of generating the first authentication use data by using the key data related to the processing permitted to the means to be authenticated among processing relating to the authenticating means for the encryption, and a second step of providing the first authentication use data generated in the first step and key designation data designating the key data used in the first step to the means to be authenticated.

A data processing device of a third invention is a data processing system providing first authentication use data used for authentication by means to be authenticated to the means to be authenticated when authenticating means holding key data uses the key data designated by the means to be authenticated holding the first authentication use data for encryption to generate second authentication use data, uses the second authentication use data to authenticate with the means to be authenticated, and performs processing related to the key data conditional on the authentication confirming that the first authentication use data and the second authentication use data are the same, the data processing device has a first means for generating the first authentication use data by using the key data related to the processing permitted to the means to be authenticated among processing relating to the authenticating means for the encryption, and a second means for providing the first authentication use data generated in the first means and key designation data designating the key data used in the first means to the means to be authenticated.

On the data processing device of the third invention, first, a first means generates the first authentication use data by using the key data related to the processing permitted to the means to be authenticated among processing relating to the authenticating means for the encryption.

Then, a second means provides the first authentication use data generated in the first means and key designation data designating the key data used in the first means to the means to be authenticated.

### BRIEF DESCRIPTION OF THE DRAWINGS

FIG. 1 is a view of the overall configuration of a communication system of an embodiment of the present invention.
FIG. 2 is functional block diagram of a management device shown in FIG. 1.
FIG. 3 is a flow chart for explaining an outline of the processing step performed by the management device shown in FIG. 2.
FIG. 4 is a view for explaining a card used in processing relating to an AP edit tool and management tool shown in FIG. 2.
FIG. 5 is functional block diagram of an IC card shown in FIG. 1.
FIG. 6 is a view for explaining data stored in a memory shown in FIG. 5.
FIG. 7 is a view for explaining the software configuration of a SAM module shown in FIG. 1.
FIG. 8 is a view for explaining the hardware configuration of the SAM module shown in FIG. 1 and a memory area of an external memory 7.
FIG. 9 is a view for explaining an AP memory area shown in FIG. 8.
FIG. 10 is a view for explaining application element data.
FIG. 11 is a view for explaining the type of application element data APE.
FIG. 12 is a flow chart for explaining preparation steps of an owner card and a user card.
FIG. 13 is a view for explaining mutual authentication key data.
FIG. 14 is a view for explaining a mutual authentication code.
FIG. 15A and FIG.15B are views for explaining the relationship between the mutual authentication key data and service.
FIG. 16 is a view for explaining a method for generating synthetic key data.
FIG. 17 is a view for explaining another method of generation of synthetic key data.
FIG. 18 is a view for explaining the hierarchy of encryption of synthetic key data.
FIG. 19 is a view for explaining an example of the features of synthetic key data.
FIG. 20 is a view for explaining an example of a mode of use of the mutual authentication key data.
FIG. 21 is a flow chart for explaining mutual authentication between a SAM management function portion of the management device shown in FIG. 1 and the SAM unit.
FIG. 22 is a flow chart for explaining mutual authentication between a SAM management function portion of the management device shown in FIG. 1 and the SAM unit continuing from FIG. 21.
FIG. 23 is a flow chart for explaining the processing of the SAM unit.
FIG. 24 is a view for explaining a screen used for issuing various types of cards relating to the management device explained by using FIG. 2 and FIG. 4.
FIG. 25 is a view for explaining a screen for preparation of an owner card.
FIG. 26 is a view for explaining a card request screen.
FIG. 27 is a view for explaining a screen for preparation of a user card.
FIG. 28 is a view for explaining a screen for preparation of an AP encryption card.
FIG. 29 is a view for explaining a screen for preparation of a transport card.

### BEST MODE FOR WORKING THE INVENTION

Hereinafter, an explanation will be given of preferred embodiments by referring to the drawings.

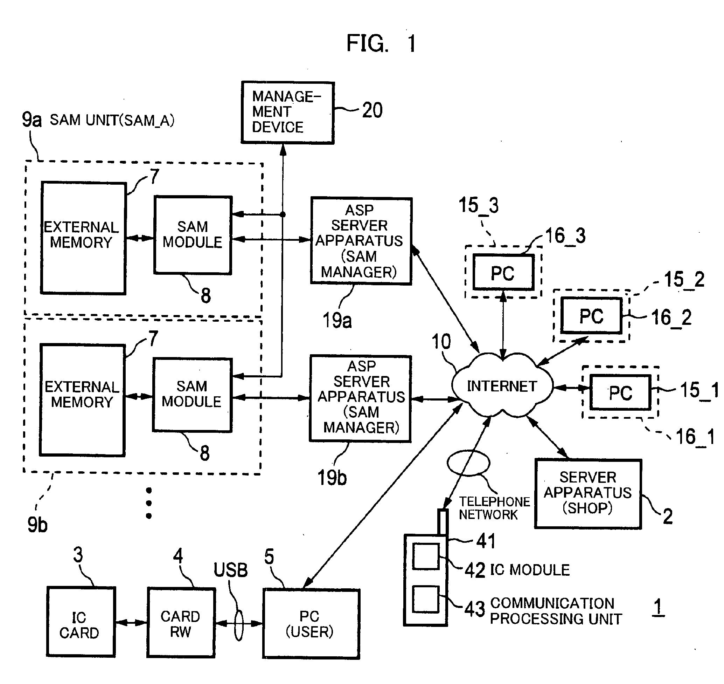

FIG. 1 is a view of the overall configuration of a communication system 1 of the present embodiment.

As shown in FIG. 1, the communication system 1 uses a server apparatus 2 disposed in a store etc., an IC card 3, a card reader/writer 4, a personal computer 5, an ASP (application service provider) server apparatus 19, SAM (secure application module) units 9a, 9b,..., a management device 20, and a mobile communication device 41 having a built-in IC module 42 to communicate via the Internet 10 and perform processing such as settlements using the IC card 3 or the mobile communication device 41.

In the communication system 1, the management device 20 performs the processing relating to an embodiment corresponding to the present invention.

Namely, the management device 20 performs processing for issuing cards (for example, owner cards and user cards explained later) having built-in ICs (integrated circuits of the present invention) used for making the SAM units 9a and 9b perform predetermined processing authorized by a manager etc. Due to this, it provides data required for mutual authentication to the means to be authenticated.

Further, the issued cards are used by the manager and the user and the management device 20 performs mutual authentication used between the SAM units 9a and 9b and makes the SAM units 9a and 9b perform the authorized predetermined processing.

In this case, the management device 20 becomes the means to be authenticated of the present invention, and the SAM units 9a and 9b become the authenticating means of the present invention.

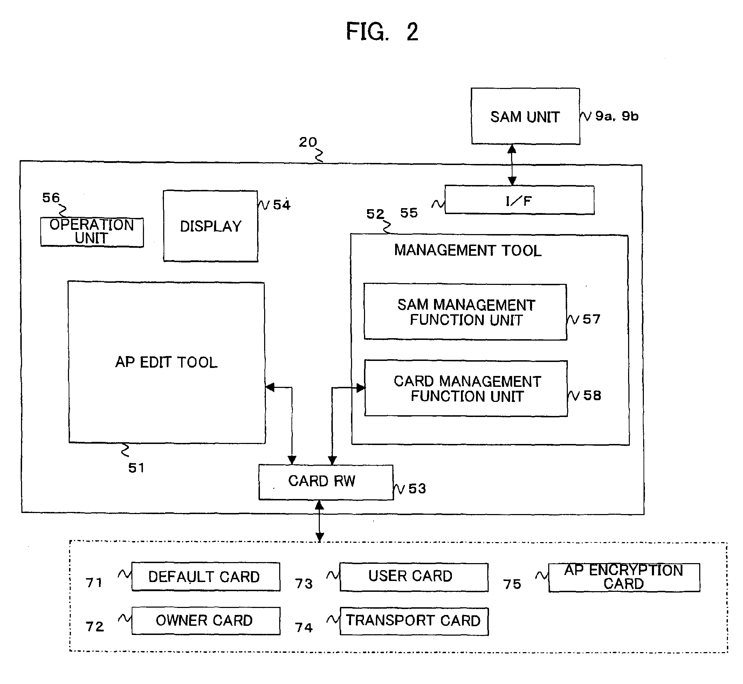

FIG. 2 is functional block diagram of the management device 20.

As shown in FIG. 2, the management device 20 has for example an AP edit tool 51, a management tool 52, a card reader/writer 53, a display 54, an I/F 55, and an operation unit 56.

The AP edit tool 51 and the management tool 52 may be realized by the data processing device executing a program (corresponding to the program of the ninth aspect of the invention) and may be realized by an electronic circuit (hardware).

The management tool 52 has for example a SAM management function portion 57 and a card management function portion 58.

The card reader/writer 53 transfers data by a noncontact method or a contact method with ICs of various cards shown below.

The display 54 is used for displaying a card issuance screen and an AP management screen.

The I/F 55 transfers data with the SAM units 9a and 9b by the noncontact method or the contact method.

The operation unit 56 is used for inputting instructions or data to the AP edit tool 51 and the management tool 52.

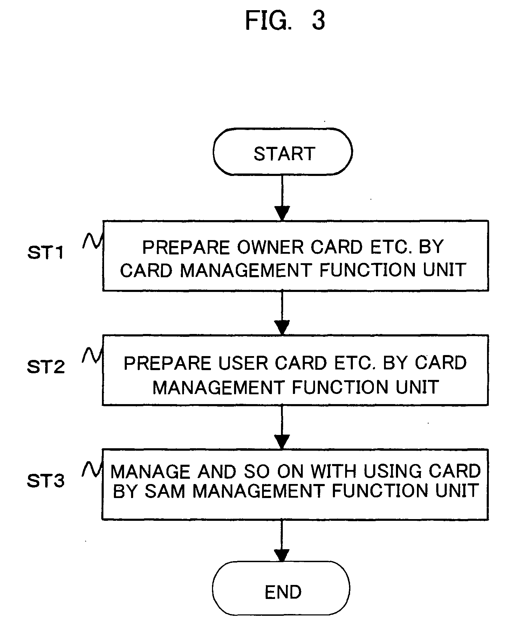

FIG. 3 is a flow chart for explaining an outline of the processing step performed by the management device 20.

### Step ST1:

The management device 20 prepares an owner card 72 in which predetermined data is stored using a default card 71 set in the card reader/writer 53 by the card management function portion 58 in response to operation of the manager.

Namely, the management device 20 encrypts the device key data explained later by using the mutual authentication key data (key data of the present invention) related to the processing authorized to the means to be authenticated using the owner card 72 among processings relating to the SAM units 9a and 9b (authenticating means of the present invention) by a predetermined encryption method (predetermined generation method of the present invention) and generates the synthetic key data (first authentication use data of the present invention) making the mutual authentication key data hard to restore.

Where giving the user of the owner card 72 the authority to use all processing relating to the SAM units 9a and 9b, the synthetic key data is generated by using a plurality of the mutual authentication key data related to all the processing.

Then, the management device 20 writes the generated synthetic key data and the key designation data designating the mutual authentication key data used for the generation of the synthetic key data into the ICs (integrated circuits of the present invention) of the owner card 72.

### Step ST2:

The management device 20 prepares an user card 73 in which predetermined data is stored using the owner card 72 set in the card reader/writer 53 by the card management function portion 58 in response to operation of the manager.

Namely, the management device 20 encrypts the device key data by using the mutual authentication key data related to the processing authorized to the means to be authenticated using the user card 73 among processings relating to the SAM units 9a and 9b by a predetermined encryption method (predetermined generation method of the present invention) and generates the synthetic key data (first authentication use data of the present invention) making the mutual authentication key data hard to restore.

When giving the authority to use a portion of processing which the user of the owner card 72 has selected among all the processing relating to the SAM units 9a and 9b to the user of the user card 73, the synthetic key data is generated by using single or a plurality of the mutual authentication key data related to a portion of processing selected.

Then, the management device 20 writes the generated synthetic key data and the key designation data designating the mutual authentication key data used for the generation of the synthetic key data into the ICs (integrated circuits of the present invention) of the user card 73.

Further, the management device 20 prepares the transport card 74 and the AP encryption card 75 in response to operation of the manager used the owner card 72.

### Step ST3:

Here, the user of the owner card 72 or the user card 73 makes the SAM units 9a and 9b perform the processing the authority of which was given to the user via the management device 20 by using these cards.

In this case, the user makes the card reader/writer 53 of the management device 20 read and fetch the key designation data stored in the IC of the owner card 72 or the user card 73.

The SAM management function portion 57 of the management device 20 outputs the read key designation data to the SAM units 9a and 9b.

Then, the SAM units 9a and 9b use the mutual authentication key data designated by the key designation data to encrypt the device key data by a predetermined encryption method and generate synthetic key data (second authentication use data of the present invention).

Then, the SAM management function portion 57 uses the synthetic key data read out from the card 72 or the card 73 for authentication, while the SAM units 9a and 9b use the generated synthetic key data for authentication.

Then, when the authentication decides that the SAM management function portion 57 and the SAM units 9a and 9b hold the same synthetic key data, the SAM units 9a and 9b execute processing related to one or more mutual authentication key data used for generating the synthetic key data in response to an instruction from the management device 20.

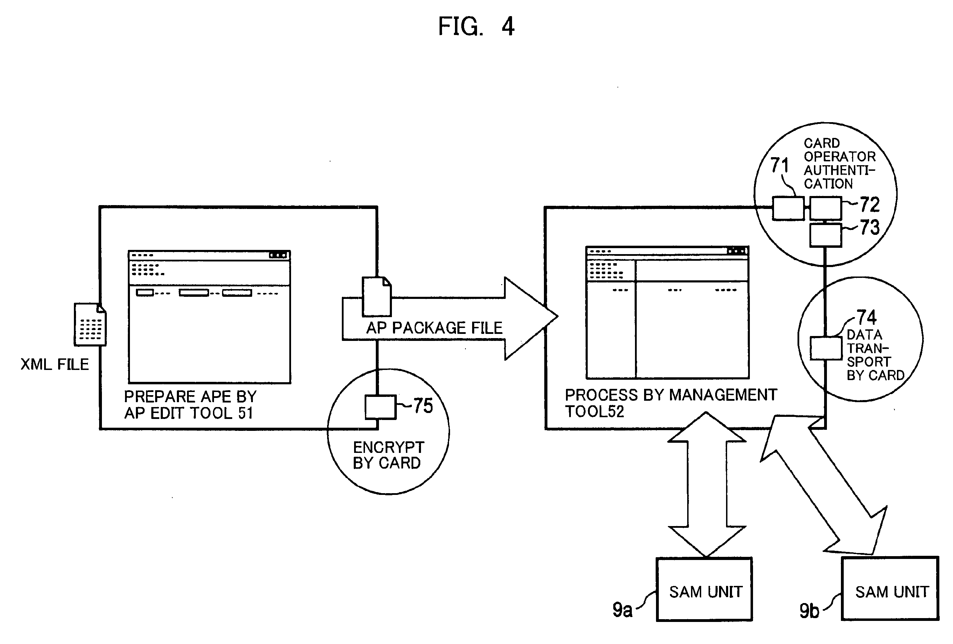

FIG. 4 is a view for explaining cards used in the processing relating to the AP edit tool 51 and the management tool 52 shown in FIG. 2.

As shown in FIG. 4, when using the management tool 52 of the management device 20 to access the SAM units 9a and 9b, the owner card 72 and the user card 73 are used.

Further, when providing an AP package file generated by the AP edit tool 51 to the management tool 52, the AP package file is encrypted using the encryption key data stored in the IC of the AP encryption card 75.

Namely, as shown in FIG. 4, the user prepares the application element data APE configuring the application program AP in the SAM module 8 by using the AP edit tool 51.

Then, the AP edit tool 51 prepares an AP package file including one or more application element data APE, encrypts this by using the encryption key data stored in the AP encryption card 75, and provides this to the management tool 52.

The management tool 52 performs mutual authentication with the SAM units 9a and 9b as explained above and writes the AP package file received from the AP edit tool 51 to the AP memory areas in the SAM units 9a and 9b authorized relating to the mutual authentication key data used for the mutual authentication.

Further, the transport card 74 is used for extracting data relating to the security of key data etc. held by the SAM units 9a and 9b, transferring the same to another apparatus, and storing the same.

### [IC Card 3 and Mobile Communication Device 41]

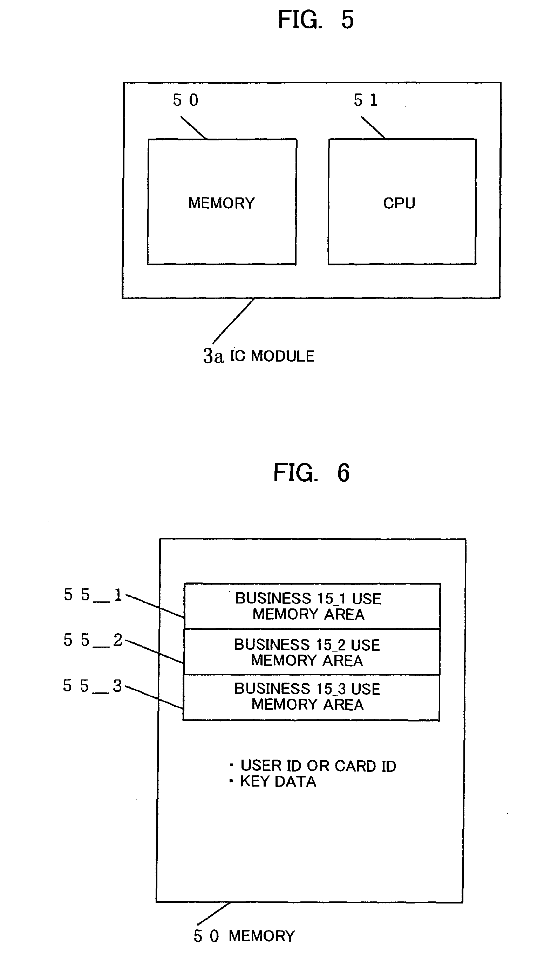

FIG. 5 is functional block diagram of the IC card 3.

As shown in FIG. 5, the IC card 3 has an IC (integrated circuit) module 3a provided with a memory 50 and a CPU 51.

The memory 50 has, as shown in FIG. 6, a memory area 55_1 used by a service business 15_1 such as a credit card company, a memory area 55_2 used by a service business 15_2, and a memory area 55_3 used by a service business 15_3.

Further, the memory 50 stores the key data used for deciding the access right to the memory area 55_1, the key data used for deciding the access right to the memory area 55_2, and the key data used for deciding the access right to the memory area 55_3. The key data is used for the mutual authentication, the encryption and decryption, etc. of the data.

Further, the memory 50 stores identification data of the IC card 3 or the user of the IC card 3.

The mobile communication device 41 has a communication processing unit 43 for communication with ASP server apparatuses 19a and 19b via a mobile phone network and the Internet 10 and an IC module 42 able to transfer data with the communication processing unit 43 and communicates with the SAM unit 9a from an antenna via the Internet.

The IC module 42 has the same functions as those of the IC module 3a of the IC card explained above except for the point of transferring data with the communication processing unit 43 of the mobile communication device 41.

Note that the processing using the mobile communication device 41 is carried out in the same way as the processing using the IC card 3, while the processing using the IC module 42 is carried out in the same way as the processing using the IC module 3a. Therefore, in the following explanation, the processing using the IC card 3 and the IC module 3a will be exemplified.

Below, an explanation will be given of the SAM units 9a and 9b.

As shown in FIG. 1, the SAM units 9a and 9b have external memories 7 and SAM modules 8.

Here, the SAM module 8 may be realized as a semiconductor circuit or may be realized as a device accommodating a plurality of circuits in a housing.

### [Software Configuration of SAM Module 8]

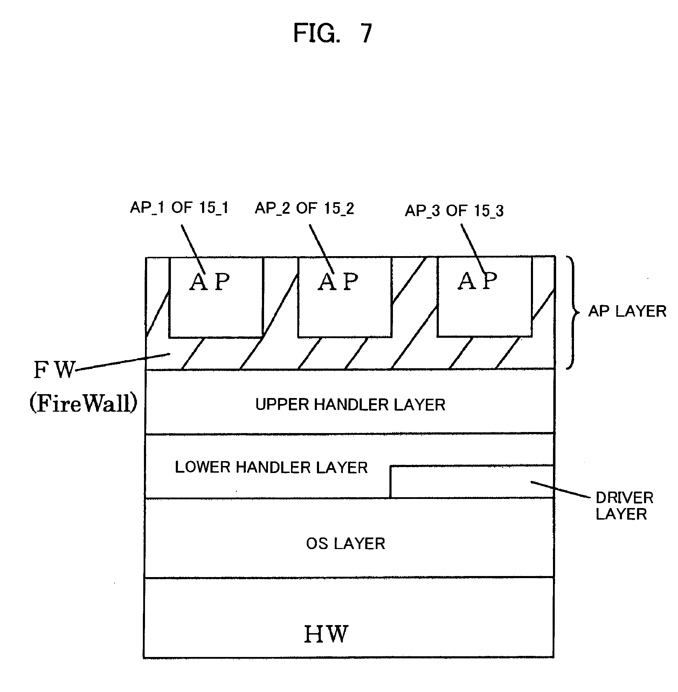

The SAM module 8 has the software configuration as shown in FIG. 7.

As shown in FIG. 7, the SAM module 8 has, from the bottom layer to the top layer, a hardware HW layer, a driver layer (OS layer) including an RTOS kernel etc. corresponding to the peripheral HW, a lower handler layer for performing processing in logically composed units, an upper handler layer combining application-specific libraries, and an AP layer in that order.

Here, in the AP layer, the application programs AP_1, AP_2, and AP_3 prescribing procedures by the service businesses 15_1, 15_2, and 15_3 such as the credit card company shown in FIG. 1 using the IC cards 3 are read out from the external memory 7 and run.

In the AP layer, firewalls FW are provided between the application programs AP_1, AP_2, and AP_3 and between them and the upper handler layer.

### [Hardware Configuration of SAM Module 8]

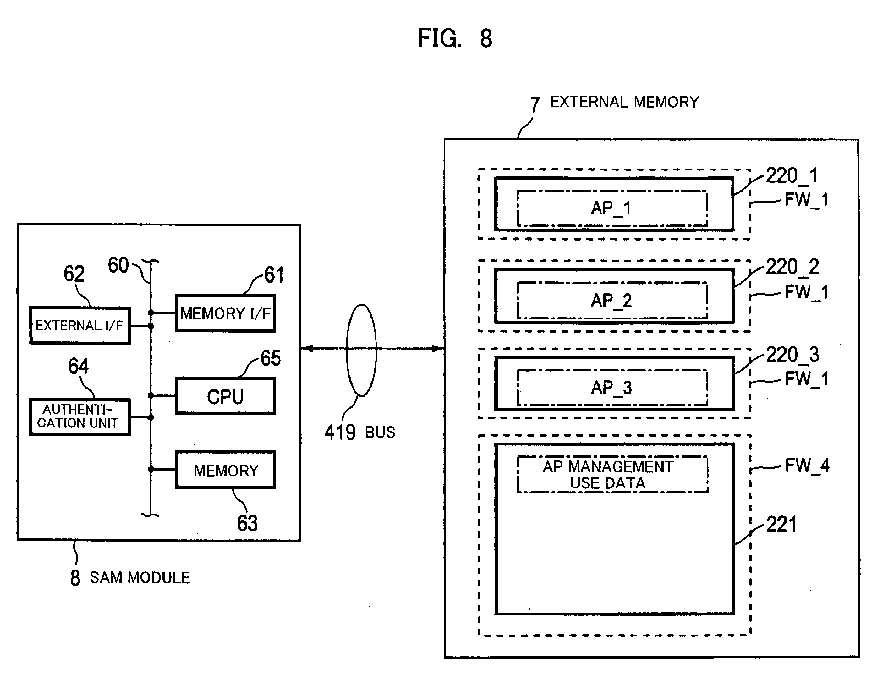

FIG. 8 is a view for explaining the hardware configuration of the SAM module 8 and the memory area of the external memory 7.

As shown in FIG. 8, the SAM module 8 has for example a memory I/F 61, an external I/F 62, a memory 63, an authentication unit 64, and a CPU 65 connected via a bus 60.

The memory I/F 61 transfers data with the external memory 7.

The external I/F 62 transfers data and commands with the ASP server apparatuses 19a and 19b and the management device 20 shown in FIG. 1.

The memory 63 stores various key data etc. used for the mutual authentication etc. of the SAM units 9a and 9b explained later. The key data may be stored in the AP management use memory area 221 of the external memory 7 as well.

The authentication unit 64 performs the processing relating to the mutual authentication explained later. The authentication unit 64 performs for example encryption and decryption using predetermined key data.

The CPU 65 centrally controls the processing of the SAM module 8.

When confirming that the means to be authenticated is a legitimate party by the mutual authentication, the CPU 65 authorizes the processing related to the mutual authentication key data explained later to the means to be authenticated and executes this as will be explained later.

A detailed explanation will be given below of the mutual authentication processing by the SAM module 8.

### [External Memory 7]

As shown in FIG. 8, the memory area of the external memory 7 includes an AP memory area 220_1 (service AP resource area) for storing the application program AP_1 of the service business 15_1, an AP memory area 220_2 for storing the application program AP_2 of the service business 15_2, an AP memory area 220_3 for storing the application program AP_2 of the service business 15_3, and an AP management use memory area 221 (system AP resource area and manufacturer AP resource area) used by the manager of the SAM module 208.

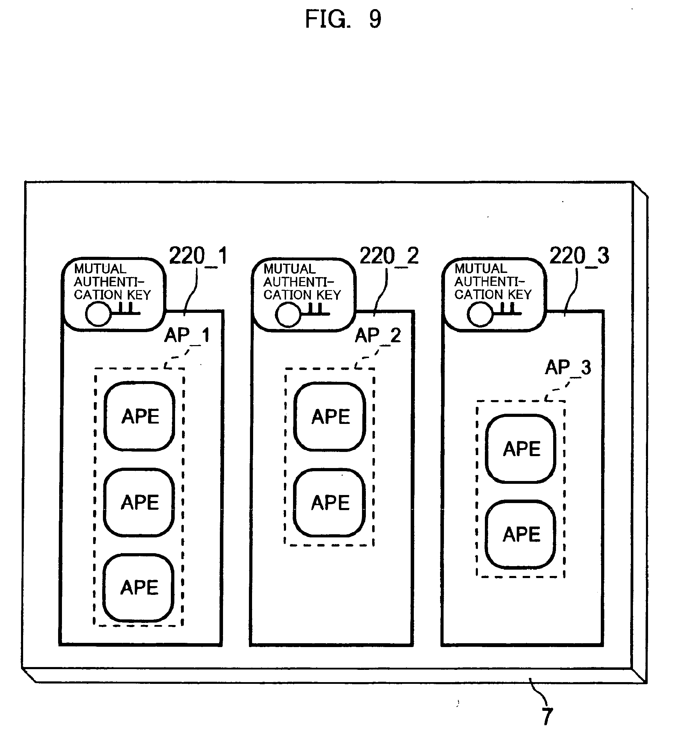

The application program AP_1 stored in the AP memory area 220_1 includes a plurality of application element data APE (data modules of the present invention) explained later as shown in FIG. 9. The access to the AP memory area 220_1 is restricted by a firewall FW_1.

The application program AP_2 stored in the AP memory area 220_2 includes a plurality of application element data APE as shown in FIG. 9. The access to the AP memory area 220_2 is restricted by a firewall FW_2.

The application program AP_3 stored in the AP memory area 220_3 includes a plurality of application element data APE as shown in FIG. 9. The access to the AP memory area 220_3 is restricted by a firewall FW_3 (illustrated in FIG. 8).

In the present embodiment, the application element data APE is the minimum unit downloaded from the outside of for example the SAM unit 9a into the external memory 7. The number of the application element data APE composing each application program can be freely determined by the corresponding service business.

Further, the application programs AP_1, AP_2, and AP_3 are prepared for example by service businesses 16_1, 16_2, and 16_3 by using the personal computers 15_1, 15_2, and 15_3 shown in FIG. 1 and downloaded to the external memory 7 via the SAM mobile 8.

Note that the program and the data stored in the AP management use memory area 221 are also composed by using the application element data APE.

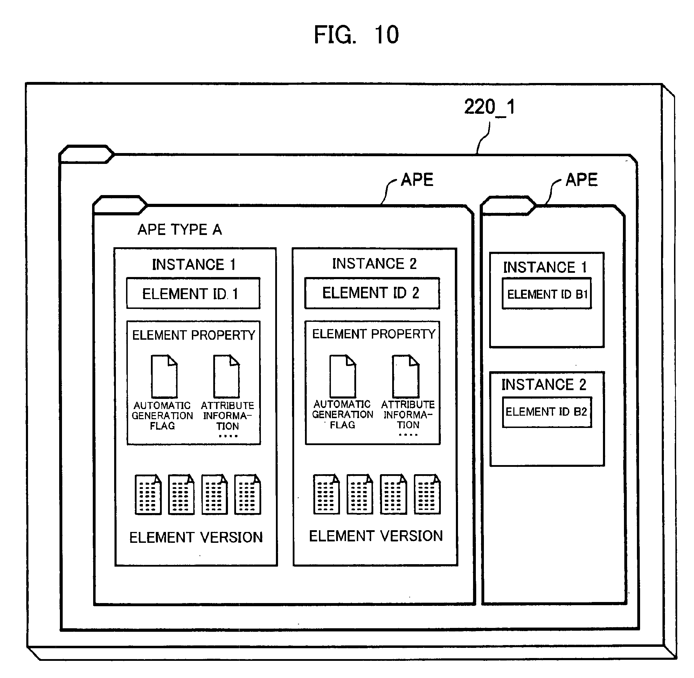

FIG. 10 is a view for explaining the application element data APE.

The application element data APE is composed by using the instance prescribed according to the APE type indicating the classification prescribed based on the attribute (type) of the APE as shown in FIG. 10.

Each instance is prescribed according to an element ID, an element property, and an element version.

It is prescribed based on the APE type in which of the service AP memory areas 220_1, 220_2, and 220_3 and the AP management use memory area 221 the application element data APE is stored.

The service AP memory area 220_1 stores the data which can be accessed by each service business.

Note that the AP management use memory area 221 has a system AP memory area for storing the data which can be accessed by the manager of the system and a manufacturer AP memory area for storing the data which can be accessed by the manufacturer of the system.

Further, the AP memory area is composed by the service AP memory areas 220_1, 220_2, and 220_3 and the AP management use memory area 221.

In the present embodiment, an ID (AP memory area ID) is assigned to each of the service AP memory areas 220_1, 220_2, and 220_3 and the AP management use memory area 221, and an identification use number (APE type number, instance number, and element version number) is assigned to each of the APE type, the instance, and the element version.

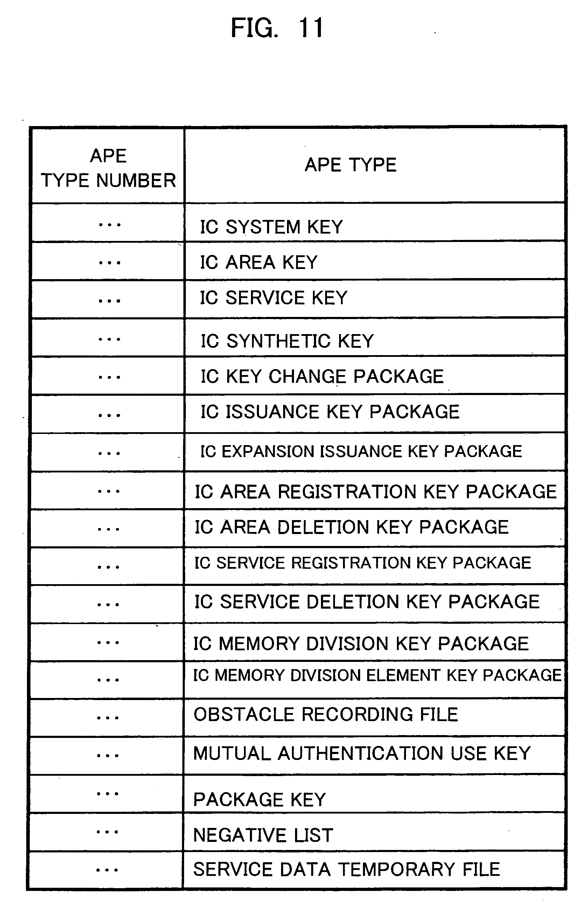

FIG. 11 is a view for explaining an example of the APE type.

As shown in FIG. 11, the APE type includes IC system key data, IC area key data, IC service key data, IC synthetic key data, IC key change package, IC issuance key package, IC EXPANSION issuance key package, IC area registration key package, IC area deletion key package, IC service registration key package, IC service deletion key package, IC memory division key package, IC memory division element key package, obstacle recording file, mutual authentication use key, package key, negative list, and service data temporary file.

The APE type number is assigned to each APE type.

Below, an explanation will be given of part of the APE type shown in FIG. 1.

The IC system key data, the IC area key data, the IC service key data, and the IC synthetic key data are card access key data used for the read/write operation of data with respect to the memories 50 of the IC card 3 and the IC module 42.

The mutual authentication use key data is also used for the mutual authentication between APs existing in the same SAM. The SAM mutual authentication use key data means the key data used when accessing the corresponding application element data APE from another AP in the same SAM or another SAM.

The IC memory division use key package is the data used for dividing the memory area of the external memory 7 and the memory of the IC card 3 before the start of provision of service using the IC card 3 by the service business.

The IC area registration key package is the data used at the time of area registration in the memory area of the memory of the IC card 3 before starting provision of service using the IC card 3 by the service business.

The IC area deletion key package is a package able to be automatically generated from the card access key data inside the SAM.

The IC service registration use key package is used for registering the application element data APE of the external memory 7 before the start of the provision of the service using the IC card 3 by the service business.

The IC server deletion key package is used for deleting application element data APE registered in the external memory 7.

### [Preparation of Owner Card 72 and User Card 73]

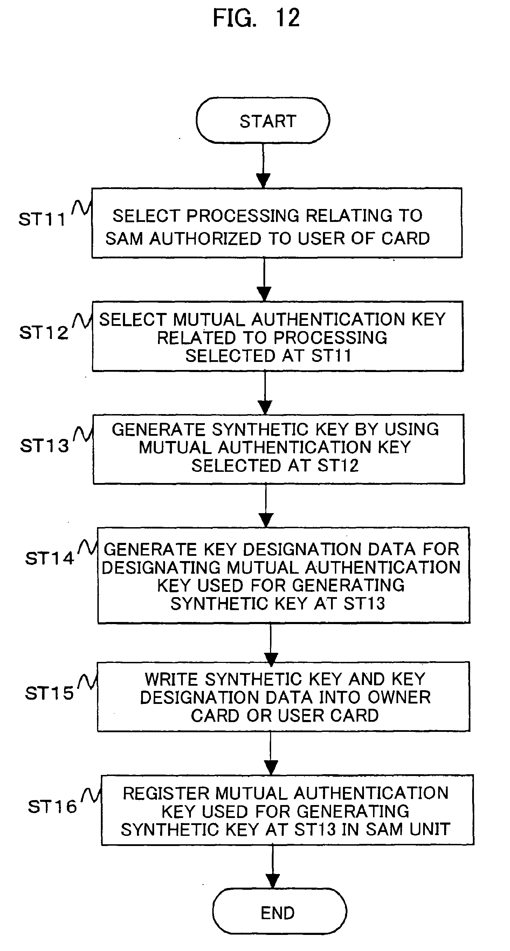

FIG. 12 is a flow chart for explaining steps for preparation of the owner card 72 and the user card 73.

FIG. 12 shows details of steps ST1 and ST2 shown in FIG. 3.

### Step ST11:

For example, when the manager prepares the owner card 72, it selects the processing relating to the SAM units 9a and 9b authorized to the user of the owner card 72.

Further, when the manager etc. prepares the user card 73, it selects the processing relating to the SAM units 9a and 9b authorized to the user of the user card 73.

The processing relating to the SAM units 9a and 9b includes for example the processing for executing the functions provided by the SAM units 9a and 9b or the access to the data held by the SAM units 9a and 9b (for example the application element data APE).

### Step ST12:

The manager etc. selects the mutual authentication key data related to the processing selected at step ST11 and inputs or designates the same to the card management function portion 58 of the management device 20.

The mutual authentication key data will be explained in detail later.

### Step ST13:

The card management function portion 58 of the management device 20 uses one or more mutual authentication key data selected at step ST12 to generate the synthetic key data based on the degradation processing method (the predetermined generation method of the present invention) explained later.

The degradation processing will be explained in detail later.

### Step ST14:

The card management function portion 58 of the management device 20 generates the key designation data indicating the mutual authentication code for identifying the mutual authentication key data used for generating the synthetic key data at step ST13.

The key designation data becomes data indicating the right of execution of the processing relating to the SAM units 9a and 9b acquired by the user of the owner card 72 or the user card 73.

### Step ST15:

The card management function portion 58 of the management device 20 writes the synthetic key data generated at step ST13 and the key designation data generated at step ST14 into the IC of the owner card 72 or the user card 73.

### Step ST16:

The card management function portion 58 of the management device 20 registers the mutual authentication key data used for generating the synthetic key data of step ST13 into the SAM units 9a and 9b.

Below, an explanation will be given of the mutual authentication key data covered by the selection at step ST12 shown in FIG. 12 explained above.

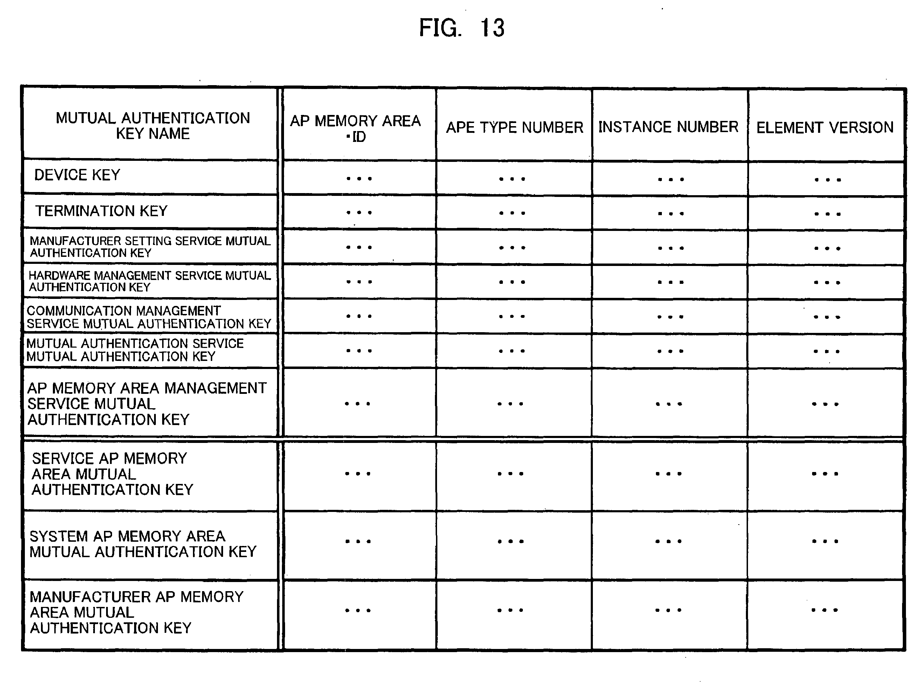

FIG. 13 is a view for explaining the mutual authentication key data covered by the selection at step ST12 shown in FIG. 12.

As shown in FIG. 13, the mutual authentication key data includes for example device key data, termination key data, manufacturer setting service mutual authentication key data, hardware management service mutual authentication key data, communication management service mutual authentication key data, mutual authentication service mutual authentication key data, AP memory area management service mutual authentication key data, service AP memory area mutual authentication key data, system AP memory area mutual authentication key data, and manufacturer AP memory area mutual authentication key data.

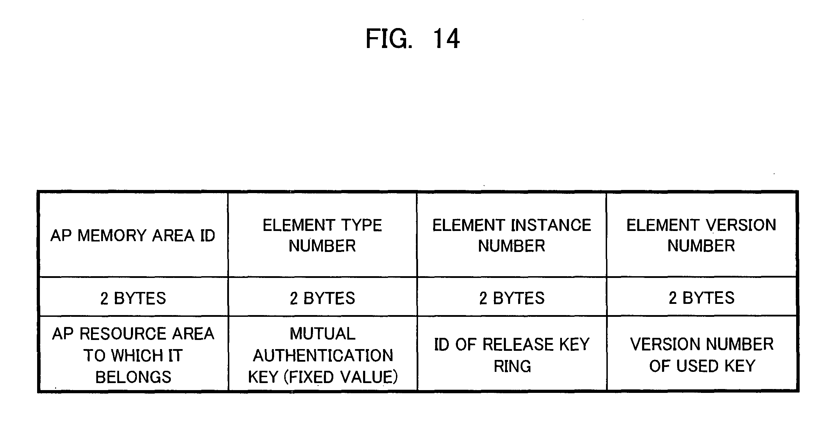

Further, as shown in FIG. 13 and FIG. 14, the mutual authentication code of the mutual authentication key data includes, as shown in FIG. 14, an AP memory area ID, an element type number, an element instance number, and an element version number explained by using FIG. 10.

Below, an explanation will be given of the key designation data generated at step ST14 shown in FIG. 12 explained above.

The key designation data is a mutual authentication code list composed by using the mutual authentication codes of a plurality of mutual authentication key data.

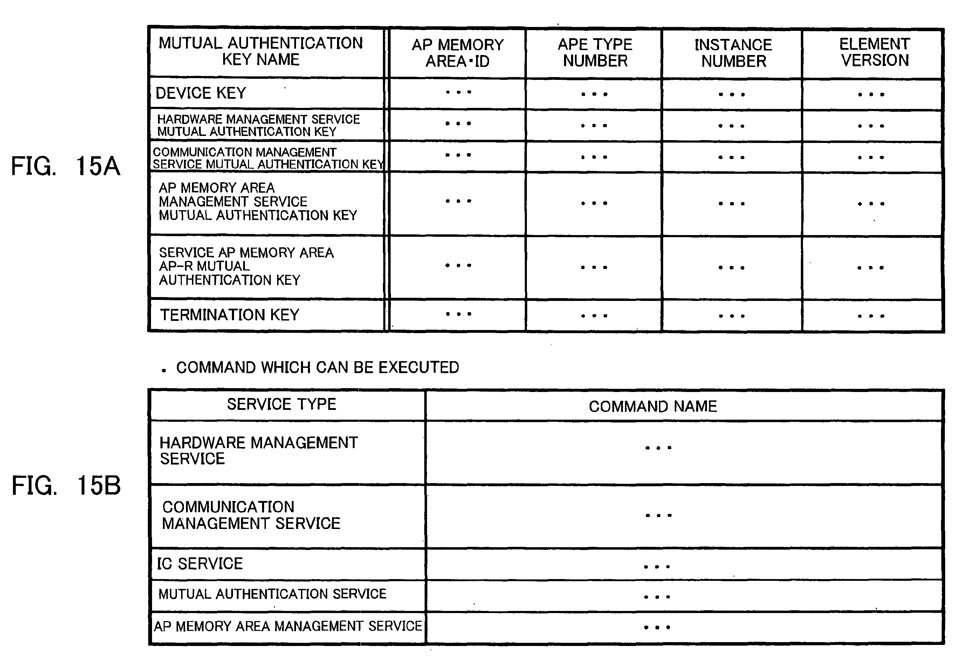

FIG. 15A and FIG.15B are views for explaining an example of the key designation data.

At step ST12 of FIG. 12, when for example the device key data, the hardware management service mutual authentication key data, the communication management service mutual authentication key data, the AP memory area management service mutual authentication key data, the service AP memory area mutual authentication key data, and the termination key data shown in FIG. 13 are selected, as shown in FIG. 15A, key designation data indicating the mutual authentication codes of all selected mutual authentication key data is generated.

At step ST13 shown in FIG. 12, when the synthetic key data is generated by using the mutual authentication key data of the mutual authentication codes shown in FIG. 15A, the mutual authentication with the SAM units 9a and 9b using the synthetic key data authorizes the management device 20, as shown in FIG. 15B, to access the hardware management service, the communication management service, the IC service (service concerning the IC card 3 and the IC module 421), the mutual authentication service, and the AP memory area management service.

In this way, in the present embodiment, the synthetic key data can be generated by using the functions of the SAM units 9a and 9b and the mutual authentication key data related to a plurality of processing including the access to the data held by the SAM units 9a and 9b (for example the application element data APE).

Due to this, the mutual authentication using a single synthetic key data enables the SAM units 9a and 9b to collectively judge whether or not both of the functions of the SAM units 9a and 9b and the access to the data held by the SAM units 9a and 9b are authorized to the means to be authenticated.

Then, the SAM units 9a and 9b execute the processings relating to the predetermined functions related to the mutual authentication key data and authorize access to the data held by the SAM units 9a and 9b from the means to be authenticated in response to an instruction of the means to be authenticated when authenticating that the means to be authenticated is legitimate.

Below, an explanation will be given of the degradation processing method of step ST13 shown in FIG. 12.

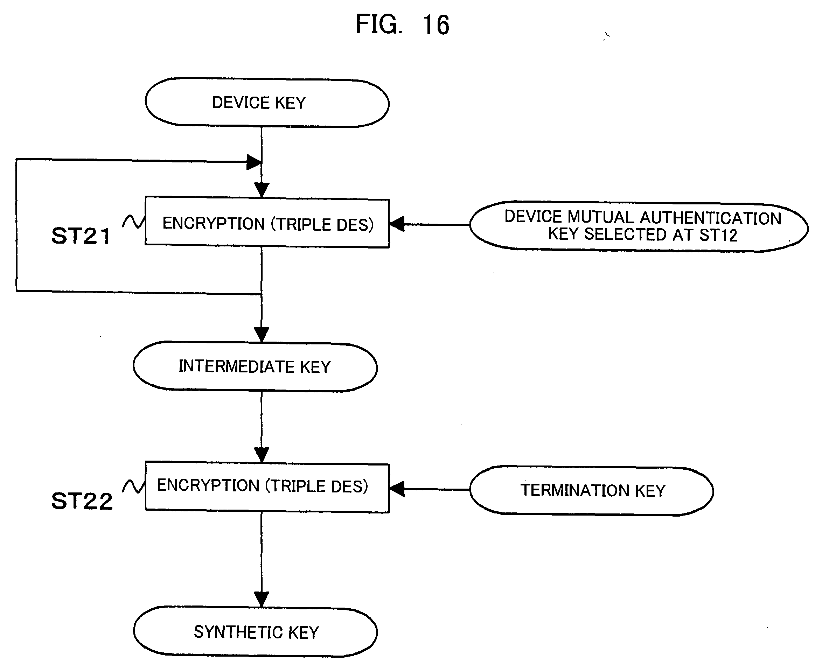

FIG. 16 is a flow chart for explaining the degradation processing method.

### Step ST21:

The card management function portion 58 of the management device 20 uses the device key data as a message, uses the first of the mutual authentication key data other than the device key data and termination key data selected at step ST12 shown in FIG. 12 as the encryption key, and encrypts the device key data to generate intermediate key data.

Here, when the number of the mutual authentication key data other than the device key data and the termination key data selected at step ST12 is one, the card management function portion 58 performs the processing of the following step ST22 by using the intermediate key data.

On the other hand, when the number of the mutual authentication key data other than the device key data and the termination key data selected at step ST12 is two or more, the card management function portion 58 uses the intermediate key data as the message and uses the next mutual authentication key data as the encryption key to perform the encryption.

The card management function portion 58 uses all mutual authentication key data other than the device key data and the termination key data selected at step ST12 as the encryption key and repeats the above processings until the above encryption is carried out. When it ends, it proceeds to the processing of step ST22.

### Step ST22:

The card management function portion 58 uses the intermediate key data obtained at step ST21 as the message and uses the termination key data as the encryption key to perform the encryption to generate the synthetic key data.

The termination key data is tamper-proofing key data and is held only by the manager.

Due to this, it is possible to prevent a party other than the manager from illegitimately tampering with the synthetic key data.

Below, an explanation will be given of a case of generating synthetic key data by a predetermined degradation processing method using the owner termination key data owned by only the manager (owner) and the user termination key data owned by the user given a right from the manager as the termination key data.

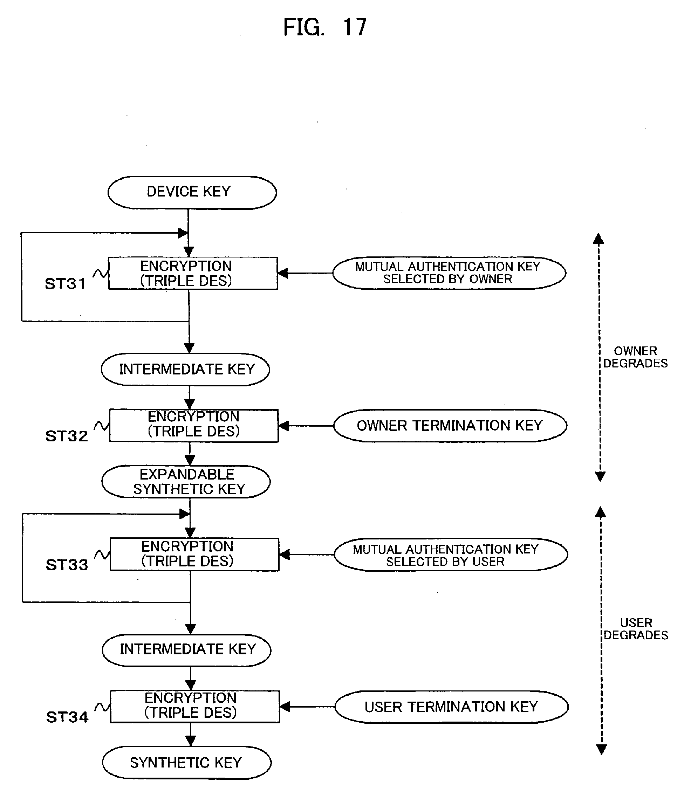

FIG. 17 is a flow chart for explaining the degradation processing method.

In FIG. 17, the processings of steps ST31 and ST32 are the same as the processings of steps ST21 and ST22 explained by using FIG. 16 except for the point of using the owner termination key data as the termination key data.

The synthetic key data generated at step ST32 is the synthetic key data which can be expanded in the sense that the users given the user termination key data can be increased.

### Step ST33:

The card management function portion 58 of the management device 20 uses the expandable synthetic key data generated by the owner as the message and uses the first of the mutual authentication key data other than the user termination key data selected by the user as the encryption key to encrypt the device key data to generate the intermediate key data.

Here, when the number of the mutual authentication key data other than the selected user termination key data is one, the card management function portion 58 performs the processing of the following step ST22 using the intermediate key data.

On the other hand, when the number of the mutual authentication key data other than the selected user termination key data is two or more, the card management function portion 58 performs the encryption by using the intermediate key data as the message and using the next mutual authentication key data as the encryption key.

The card management function unit 58 repeats the above processings until using all mutual authentication key data other than the selected termination key data as the encryption key for the encryption and proceeds to the processing of step ST34 when finishing.

### Step ST34:

The card management function unit 58 uses the intermediate key data obtained at step ST33 as the message and uses the user termination key data as the encryption key to perform encryption to generate the synthetic key data.

The user termination key data is the tamper-proofing key data and is held by only the owner and the user.

Due to this, illegitimate tampering with the synthetic key data by a party other than the owner and the user can be prevented.

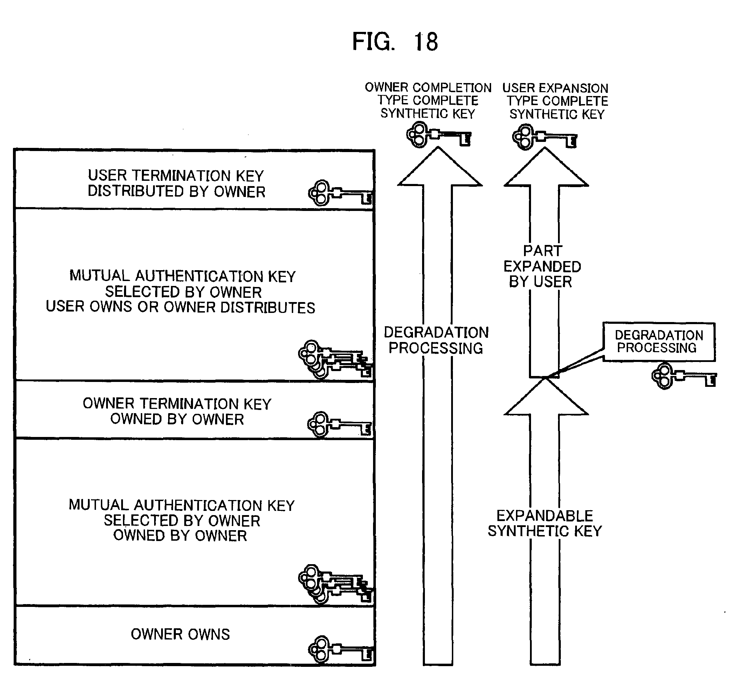

The synthetic key data generated by the processing shown in FIG. 17 includes the mutual authentication key encrypted by the hierarchy as shown in FIG. 18.

Further, in the present embodiment, it is also possible to link a plurality of application element data APE to single mutual authentication key data (for example service, system, and manufacturer AP memory area mutual authentication key data shown in FIG. 13).

Due to this, the authentication using the synthetic key data enables the SAM units 9a and 9b to collectively judge whether or not access to the application element data APE related to the single mutual authentication key data is authorized.

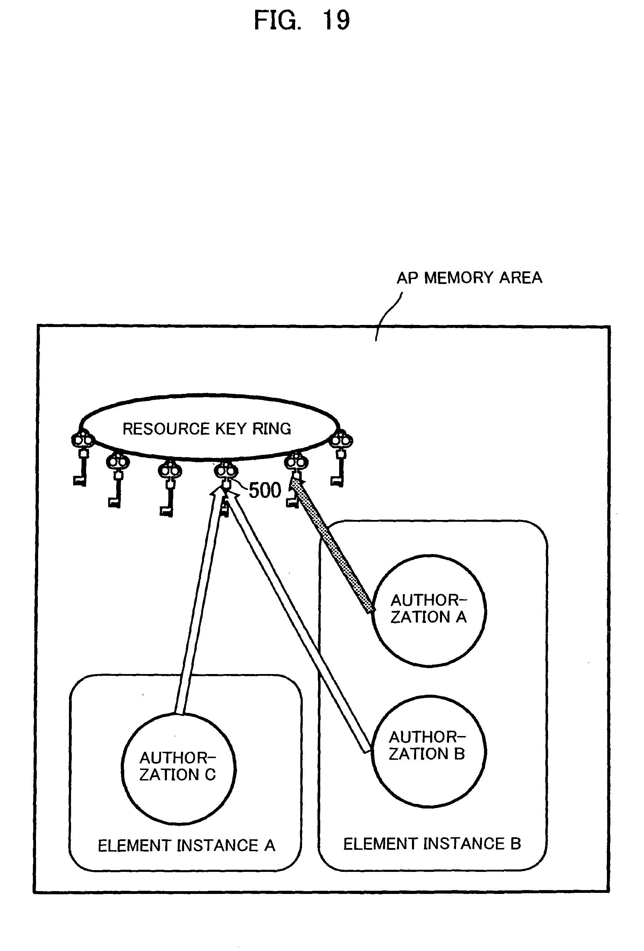

For example, in FIG. 19, an authorization C of an instance a of the application element data APE and an authorization B of an instance b are linked with mutual authentication key data 500. For this reason, if the authentication using the synthetic key data degrading the mutual authentication key data 500 succeeds, the SAM units 9a and 9b authorize access to both of the instances a and b.

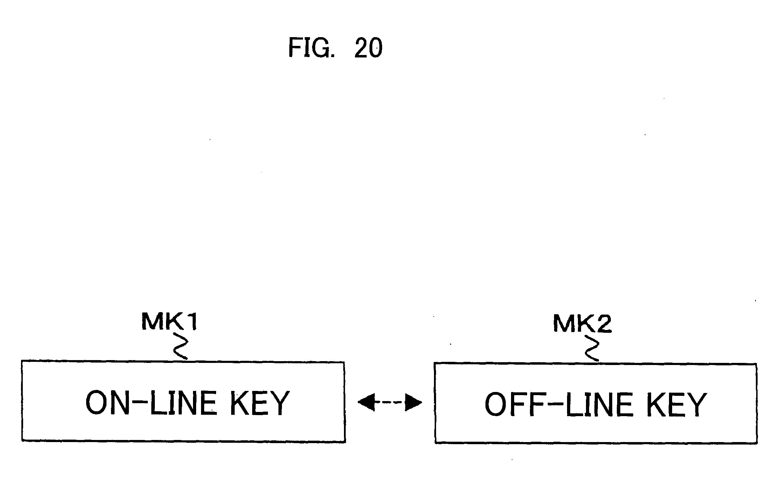

Further, in the present embodiment, it is also possible to use a pair of on-line key data MK1 and off-line key data MK2 as shown in FIG. 20 for all or part of the mutual authentication key data explained by using FIG. 13.

In this case, at the time of the mutual authentication, use is made of the on-line key data MK1, while when transferring data with the other party in the mutual authentication, the data to be transferred is encrypted by using the off-line key data MK2 corresponding to that.

Due to this, even if the on-line key data MK1 is illegitimately acquired by another party, since the data transferred between the means to be authenticated and the authenticating means is encrypted by the off-line key data MK2, illegitimate leakage of the information to the outside can be prevented.

Below, an explanation will be given of the mutual authentication between the SAM management function portion 57 of the management device 20 and the SAM units 9a and 9b performed at step ST3 etc. shown in FIG. 3.

In this case, the management device 20 becomes the means to be authenticated, and the SAM units 9a and 9b become the authenticating means.

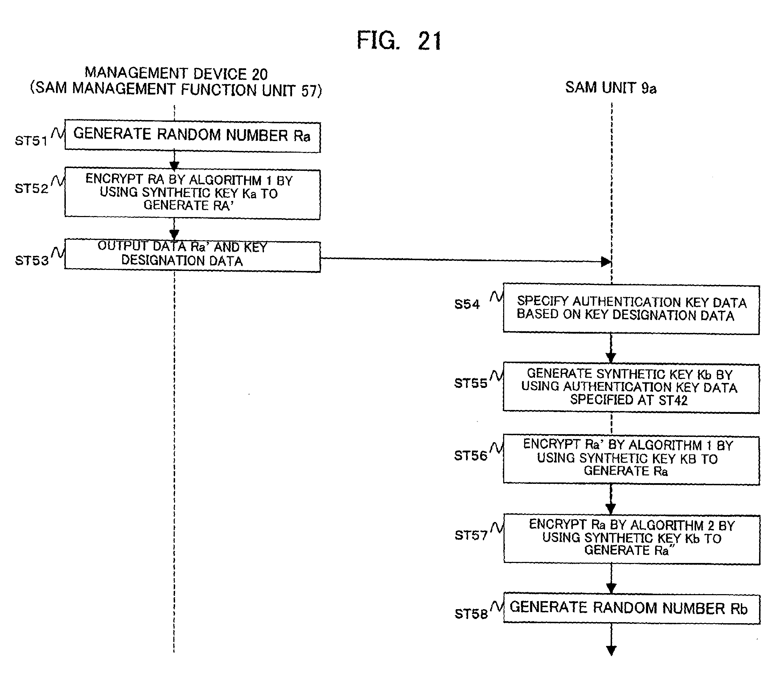

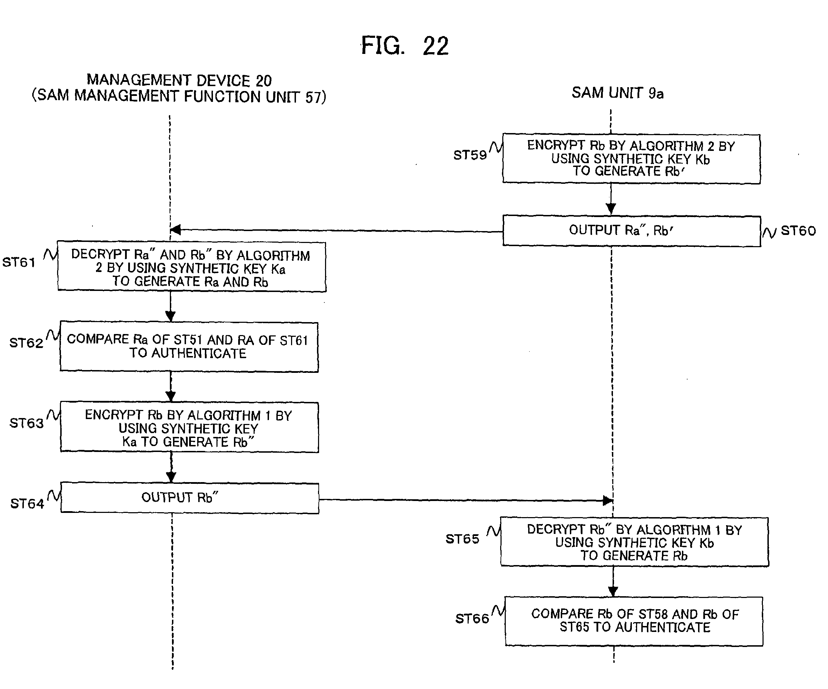

FIG. 21 and FIG. 22 are flow charts for explaining the mutual authentication between the SAM management function unit 57 of the management device 20 and the SAM unit 9a.

The SAM unit 9b is the same as the case of the SAM unit 9a shown below.

### Step ST51:

First, the manager or user sets the owner card 72 or the user card 73 in the card reader/writer 53.

Then, the synthetic key data Ka (the first authentication use data of the present invention) and the key designation data stored in the owner card 72 and the user card 73 are read into the SAM management function unit 57 of the management device 20.

The SAM management function unit 57 generates a random number Ra.

### Step ST52:

The SAM management function unit 57 encrypts the random number Ra generated at step ST51 by an encryption algorithm 1 by using the synthetic key data Ka read at step ST51 to generate the data Ra'.

### Step ST53:

The SAM management function unit 57 outputs the key designation data read at step ST51 and the data Ra' generated at step ST52 to the SAM unit 9a.

The SAM unit 9a receives as input the key designation data and the data Ra' via the external I/F 62 shown in FIG. 8 and stores this in the memory 63.

### Step ST54:

The authentication unit 64 of the SAM unit 9a specifies the mutual authentication key data indicated by the key designation data input at step ST53 from among the mutual authentication key data stored in the memory 63 or the external memory 7.

### Step ST55:

The authentication unit 64 of the SAM unit 9a uses the mutual authentication key data specified at step ST54 to perform the degradation processing explained using FIG. 16 or FIG. 17 to generate the synthetic key data Kb.

### Step ST56:

The authentication unit 64 of the SAM unit 9a uses the synthetic key data Kb generated at step ST55 to decrypt the data Ra' input at step ST53 with a decryption algorithm 1 corresponding to the encryption algorithm 1 to generate the random number Ra.

### Step ST57:

The authentication unit 64 of the SAM unit 9a uses the synthetic key data Kb to encrypt the random number Ra generated at step ST56 with an encryption algorithm 2 to generate data Ra".

### Step ST58:

The authentication unit 64 of the SAM unit 9a generates a random number Rb.

### Step ST59:

The authentication unit 64 of the SAM unit 9a uses the synthetic key data Kb to generate data Rb'.

### Step ST60:

The authentication unit 64 of the SAM unit 9a outputs the data Ra" generated at step ST57 and the data Rb' generated at step ST59 to the management device 20.

### Step ST61:

The SAM management function unit 57 of the management device 20 uses the synthetic key data Ka to decrypt the data Ra" and Rb' input at step ST60 by the decryption algorithm 2 corresponding to the encryption algorithm 2 to generate data Ra and Rb.

### Step ST62:

The SAM management function unit 57 of the management device 20 compares the random number Ra generated at step ST51 and the data Ra generated at step ST61.

Then, when the result is the same as the above comparison, the SAM management function unit 57 authenticates that the synthetic key data Kb held by the SAM unit 9a is the same as the synthetic key data Ka held by the SAM management function unit 57 and the SAM unit 9a is a legitimate authenticating means.

### Step ST63:

The SAM management function unit 57 of the management device 20 uses the synthetic key data Ka to encrypt the data Rb generated at step ST61 by the encryption algorithm 1 to generate the data Rb".

### Step ST64:

The SAM management function unit 57 of the management device 20 outputs the data Rb" generated at step ST 63 to the SAM unit 9a.

### Step ST65:

The authentication unit 64 of the SAM unit 9a uses the synthetic key data Kb to decrypt the data Rb" input at step ST64 by the decryption algorithm 1 to generate the data Rb.

### Step ST66:

The authentication unit 64 of the SAM unit 9a compares the random number Rb generated at step ST58 and the data Rb generated at step ST65.

Then, when the same result as that in the above comparison is shown, the authentication unit 64 authenticates that the synthetic key data Kb held by the SAM unit 9a is the same as the synthetic key data Ka held by the SAM management function unit 57 and the SAM management function unit 57 is a legitimate means to be authenticated.

Below, an explanation will be given of the processings performed by the SAM units 9a and 9b based on the results of the mutual authentication explained by using FIG. 21 and FIG. 22.

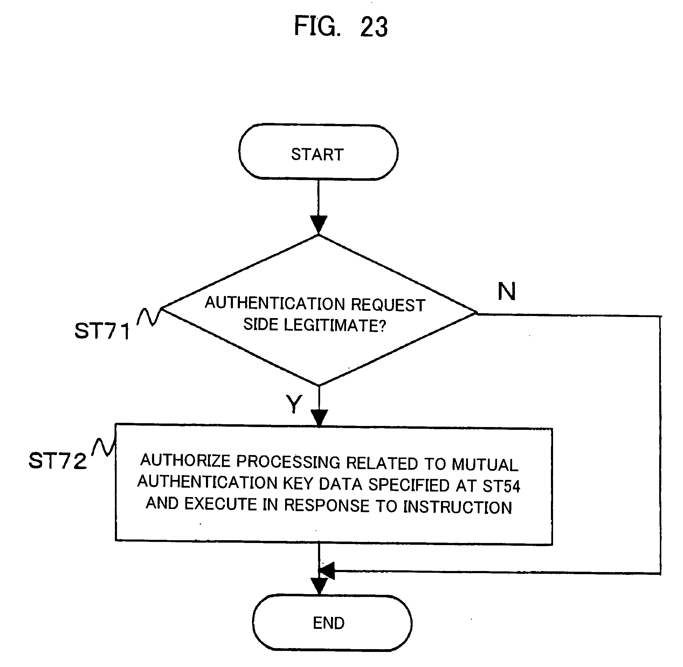

FIG. 23 is a view for explaining the processings of the SAM units 9a and 9b.

### Step ST71:

The CPUs 65 of the SAM units 9a and 9b shown in FIG. 8 judge whether or not the authentication unit 64 authenticated that the authenticating means was legitimate at step ST66 shown in FIG. 22. When deciding it as legitimate, they proceed to the processing of step ST72, while when deciding it is not, end the processing (that is, judge that the authenticating means does not have any right relating to the processing and do not execute the processing).

### Step ST72:

The CPUs 65 of the SAM units 9a and 9b execute the processings relating to the mutual authentication key data specified at step ST54 shown in FIG. 21. Due to this, the predetermined service required by the means to be authenticated is provided. Namely, the SAM units 9a and 9b judge that the means to be authenticated has the predetermined right and execute the processing authorized for the right.

Below, an explanation will be given of the screens used for issuing various types of cards in relation to the management device 20 explained by using FIG. 2 and FIG. 4.

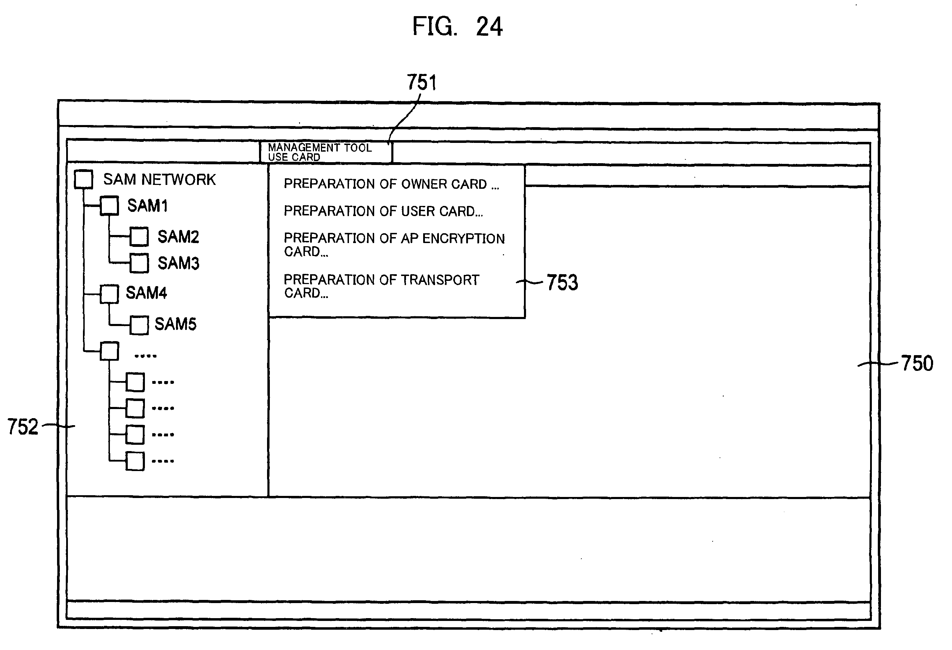

When the manager etc. operates the operation unit 56 shown in FIG. 2 to instruct display of the operation screen of the management tool 52, for example, as shown in FIG. 24, a SAM management screen 750 is displayed on the display 54.

The SAM management screen 750 displays an image 751 for instructing the preparation of a management tool use card at the tool bar.

Further, the SAM management screen 750 displays an image 752 indicating the network configuration of the SAM connected to the SAM network.

When the user designates the screen 751 on the SAM management screen 750 by for example a mouse of the operation unit 56, an image 753 is displayed.

As the image 753, images indicating the preparation of the owner card, the preparation of the user card, the preparation of the AP encryption card, and the preparation of the transport card are displayed.

Below, an explanation will be given of a screen for when instructing preparation of the cards indicated in the image 751.

First, an explanation will be given of the screen for preparing an owner card.

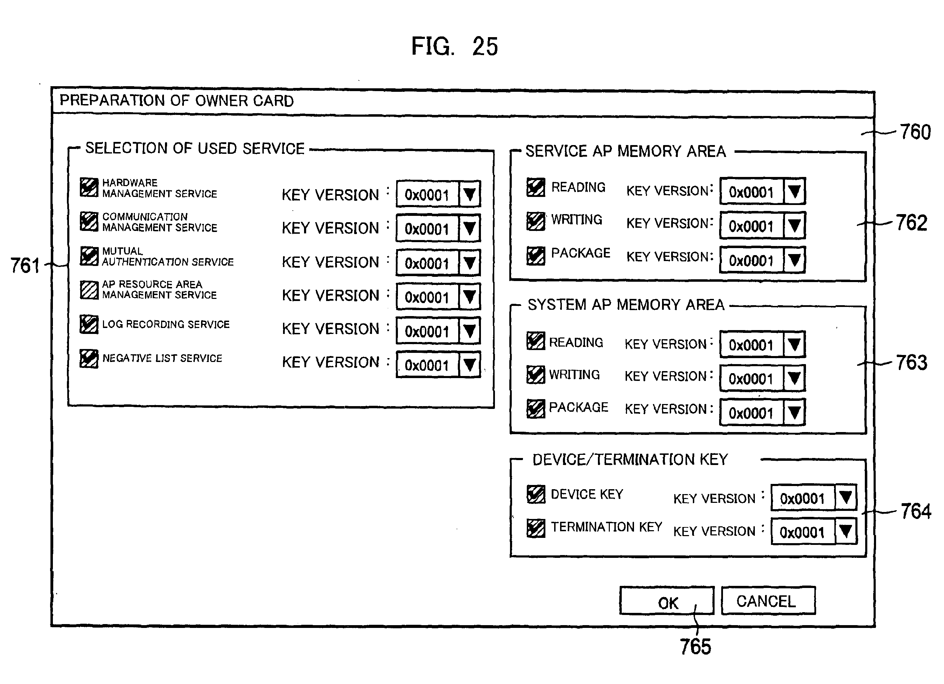

When the manager instructs the preparation of an owner card on the image 751 shown in FIG. 24 by a mouse, the card management function unit 58 shown in FIG. 2 displays an owner card preparation screen 760 shown in FIG. 25 on the display 54.

The owner card preparation screen 760 displays a used service selection image 761, a service AP memory area designation image 762, a system AP area designation image 763, a device/termination key designation image 764, and a designation decision instruction image 765.

The used service selection image 761 is an image for selecting for example the content of the service authorized to the owner card 72 to be prepared.

The service AP memory area designation image 762 is an image for selecting the format authorized for access to the service AP memory area using the owner card 72 to be prepared.

The system AP memory area designation image 763 is an image for selecting the format authorized for access to the system AP memory area using the owner card 72 to be prepared.

The device/termination key designation image 764 is an image for designating the device key data and the termination key data used for preparing the owner card 72.

The designation decision instruction image 765 is an image for inputting instructions for deciding the designated content.

When finishing designation of required items on the owner card preparation screen 760, the manager designates the designation decision instruction image 765 by the mouse etc.

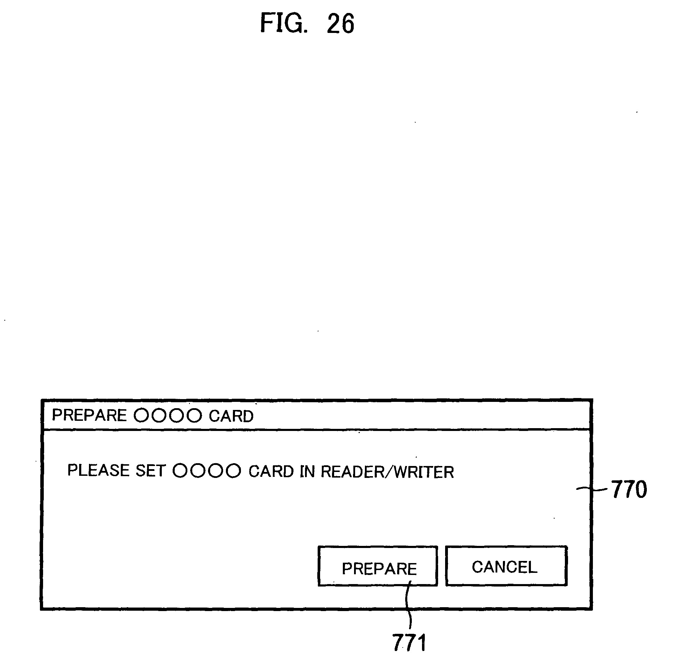

Due to this, the card set instruction screen 760 shown in FIG. 26 is displayed on the display 54.

When preparing an owner card 72, the card set instruction screen 770 instructs to set the default card 71.

Then, the manager makes the card reader/writer 53 read the data of the IC of the default card 71.

When confirming the legitimacy of the default card 71, the SAM management function unit 57 selects the mutual authentication key data related to the service etc. selected by the manager on the owner card preparation screen 760. The selection corresponds to the selection of step ST12 explained by using FIG. 12.

Next, an explanation will be given of the screen for preparation of a user card.

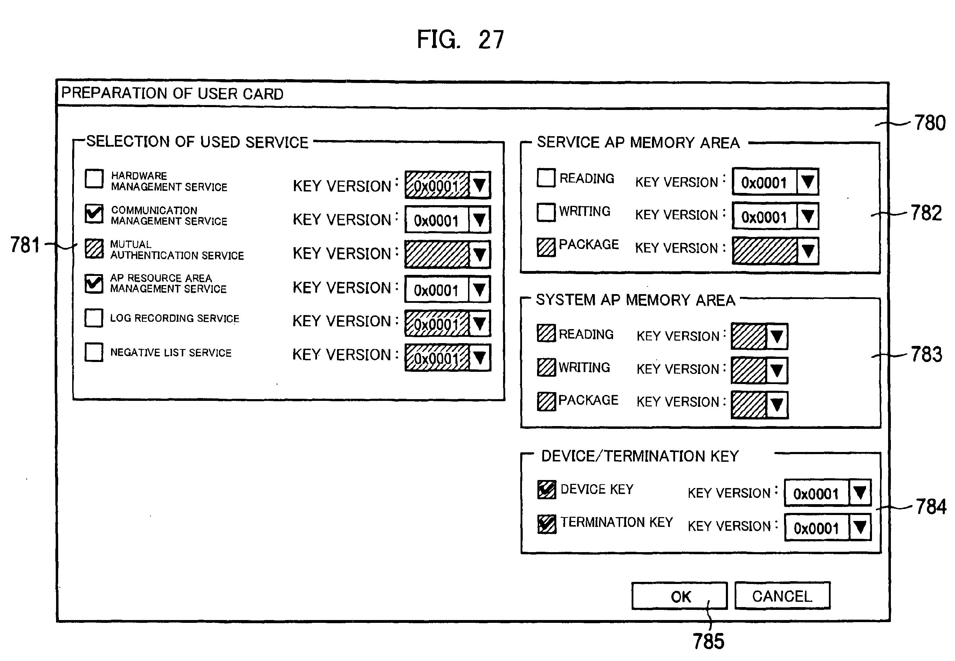

When the manager instructs the preparation of a user card on the screen 751 shown in FIG. 24 by the mouse, the card management function unit 58 shown in FIG. 2 displays the user card preparation screen 780 shown in FIG. 27 on the display 54.

The user card preparation screen 780 displays a used service selection image 781, a service AP memory area designation image 782, a system AP area designation image 783, a device/termination key designation image 784, and a designation decision instruction image 785.

The used service selection image 781 is an image for selecting the content of the service authorized to the prepared user card 73.

The service AP memory area designation image 782 is an image for selecting the format authorized for access to the service AP memory area using the prepared user card 73.

The system AP memory area designation image 783 is an image for selecting the format authorized for access to the system AP memory area using the prepared user card 73.

The device/termination key designation image 784 is an image for designating the device key data and the termination key data used for preparing the user card 73.

The designation decision instruction image 785 is an image for inputting instructions for deciding the designated content.

When finishing designating the required items on the owner card preparation screen 780, the manager designates the designation decision instruction image 785 by the mouse and so on.

Due to this, the card set instruction screen 770 shown in FIG. 26 is displayed on the display 54.

When preparing an owner card 73, the card set instruction screen 770 instructs to set the owner card 72.

Then, the manager makes the card reader/writer 53 read the data of the IC of the owner card 72.

When confirming the legitimacy of the owner card 72, the SAM management function unit 57 selects the mutual authentication key data related to the service etc. selected by the manager on the user card preparation screen 780. The selection corresponds to the selection of step ST12 explained by using FIG. 12.

Next, an explanation will be given of the screen for preparation of an AP encryption card.

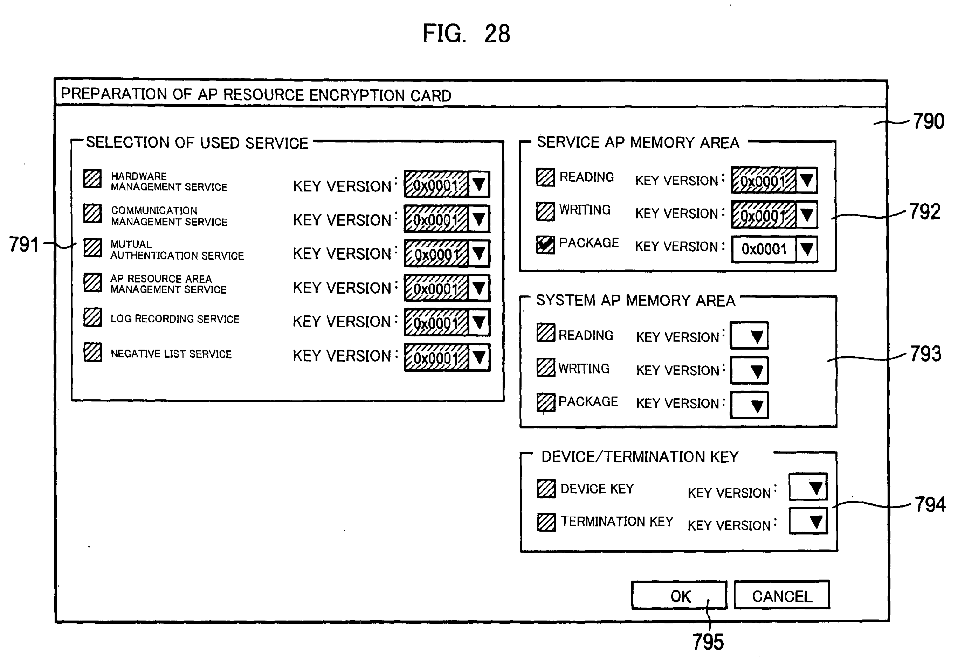

When the manager instructs the preparation of an AP encryption card on the image 751 shown in FIG. 24 by the mouse, the card management function unit 58 shown in FIG. 2 displays the AP encryption card preparation screen 790 shown in FIG. 28 on the display 54.

The AP encryption card preparation screen 790 displays a used service selection image 791, a service AP memory area designation image 792, a system AP area designation image 793, a device/termination key designation image 794, and a designation decision instruction image 795.

The used service selection image 791 is an image for selecting the content of the service authorized to for example the prepared AP encryption card 75.

The service AP memory area designation image 792 is an image for selecting the format authorized for access to the service AP memory area using the prepared AP encryption card 75.

The system AP memory area designation image 793 is an image for selecting the format for access to the system AP memory area using the prepared AP encryption card 75.

The device/termination key designation image 794 is an image for designating the device key data and the termination key data used for preparing the AP encryption card 75.

The designation decision instruction image 795 is an image for inputting instructions for deciding the designated content.

When finishing designating the required items on the AP encryption card preparation screen 790, the manager designates the designation decision instruction image 795 by the mouse etc.

Due to this, the card set instruction screen 770 shown in FIG. 26 is displayed on the display 54.

When preparing the AP encryption card 75, the card set instruction screen 770 instructs for example to set the owner card 72.

Then, the manager makes the card reader/writer 53 read the data of the IC of the owner card 72.

When confirming the legitimacy of the owner card 72, the SAM management function unit 57 selects the mutual authentication key data related to the service etc. selected by the manager on the AP encryption card preparation screen 790. The selection corresponds to the selection of step ST12 explained by using FIG. 12.

Next, an explanation will be given of the screen for preparation of a transport card.

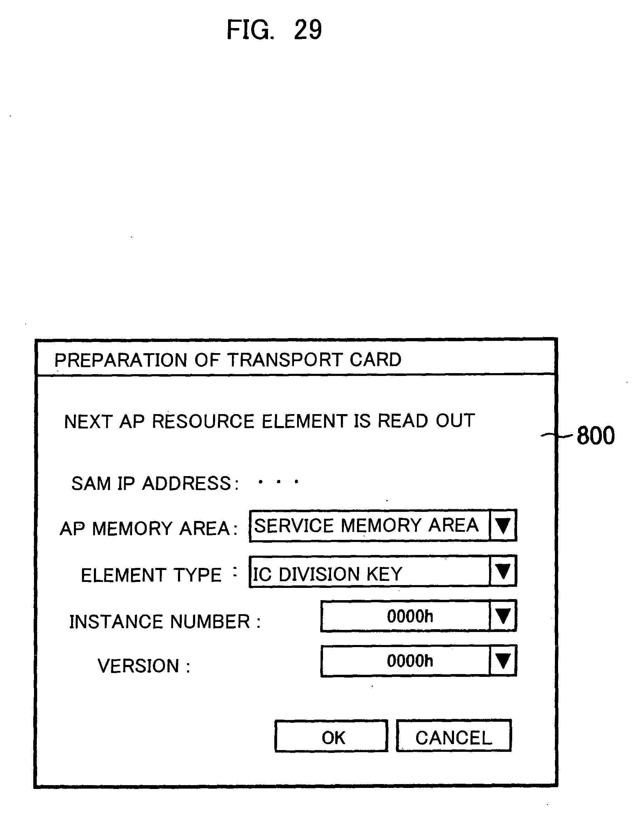

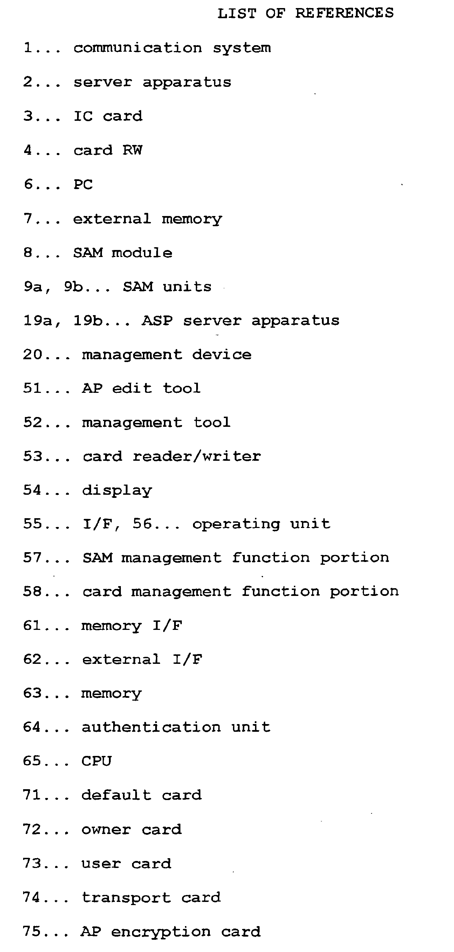

When the manager instructs the preparation of a transport card on the image 751 shown in FIG. 24, the card management function unit 58 shown in FIG. 2 displays the transport card preparation screen 800 shown in FIG. 29 on the display 54.

The transport card preparation screen 800 displays an image for instructing the IP address of the SAM authorized for coverage of transport of data, the AP memory area, the APE type of the application element data APE, the instance number, and the version number.

The card management function unit 58 degrades the mutual authentication key data related to the data for which access is authorized in the memory areas of the SAM units 9a and 9b based on the information designated on the transport card preparation screen 800 to generate the synthetic key data and writes this into the transport card 74.

As explained above, by the manager etc. selecting functions and issuing various types of cards based on the screen functionally showing processings etc. provided by the SAM units 9a and 9b, the manager can issue cards having the rights matching its own intent without concretely indicating to the manager the mutual authentication key data etc. actually used in the processing. Due to this, leakage of information relating to the security of the SAM units 9a and 9b can be avoided.

As explained above, the management device 20, as explained by using FIG. 12 and FIG. 16 etc., uses a plurality of mutual authentication key data related to the processings relating to the SAM units 9a and 9b the degradation processing to generate the synthetic key data.

Then, the synthetic key data and the key designation data for specifying the mutual authentication key data used for generating that are written in the owner card 72 and the user card 73.

Further, by performing the mutual authentication shown using FIG. 21 to FIG. 23 between the management device 20 using the owner card 72 etc. and the SAM units 9a and 9b, the SAM unit 9a generates the synthetic key data based on the key designation data received from the management device 20. When the synthetic key data coincides with that held by the management device 20, it can confirm the legitimacy of the management device 20 serving as the means to be authenticated.

Further, together with the confirmation, the processing related to the mutual authentication key data designated by the key designation data can be judged as processing authorized to the management device 20.

Due to this, the SAM units 9a and 9b do not have to hold the mutual authentication key data corresponding to all authenticating means as in the conventional case and, in addition, do not have to manage the processing authorized to the means to be authenticated in the management table either, so the processing load is reduced.

The present invention is not limited to the above embodiment.

In the present invention, it is also possible to store bio-information of the user of the card in the IC of any of for example the owner card 72, the user card 73, the transport card 74, and the AP encryption card 75 and have the SAM units 9a and 9b further use the bio-information stored in the card together with the mutual authentication so as to authenticate the legitimacy of the user.

For example, in the above embodiment, the case where the SAM units 9a and 9b performed the mutual authentication with the management device 20 was exemplified, but it is also possible if the SAM units 9a and 9b perform the authentication with means to be authenticated such as the ASP server apparatuses 19a and 19b or another SAM unit. In this case, the means to be authenticated holds the synthetic key data and the key designation data.

Further, in the embodiment, the case where the owner card 72 and the user card 73 held the synthetic key data and the key designation data was exemplified, but it is also possible to make another mobile device etc. hold these data.

### INDUSTRIAL CAPABILITY

The present invention can be applied to a system for performing predetermined processing based on authentication results.

## Claims

1. A data processing method providing first authentication use data used for authentication by means to be authenticated to the means to be authenticated when authenticating means holding key data uses the key data designated by the means to be authenticated holding the first authentication use data for encryption to generate second authentication use data, uses the second authentication use data to authenticate with the means to be authenticated, and performs processing related to the key data conditional on confirming that the first authentication use data and the second authentication use data are the same due to the authentication, comprising:
a first step of generating the first authentication use data by using the key data related to the processing permitted to the means to be authenticated among processing relating to the authenticating means and performing the encryption, and
a second step of providing the first authentication use data generated in the first step and key designation data designating the key data used in the first step to the means to be authenticated.

2. A data processing method as set forth in claim 1, wherein the second step comprises a step of writing the first authentication use data and the key designation data in an integrated circuit used by the means to be authenticated.

3. A data processing method as set forth in claim 1, wherein the first step comprises a step of generating the first authentication use data by using the key data related to function of the authenticating means permitted by the means to be authenticated or an access to data held by the authenticating means.

4. A data processing method as set forth in claim 1, wherein
the first step comprises of a step of generating the first authentication use data by encrypting authentication use data generated by using first key data related to the processing permitted to the means to be authenticated by a first user, by using second key data related to the processing permitted to the means to be authenticated by a second user received authority by the first user, and
the second step comprises a step of providing the key designation data designating the second key data further to the means to be authenticated.

5. A data processing method as set forth in claim 4, wherein the first step comprises a step of using first tamper-proofing key data managed by the first user further to encrypt authentication use data generated by using the first key data, encrypting authentication use data generated by the encryption by using the second key data, and encrypting authentication use data obtained by the encryption using the second key data by using second tamper-proofing key data distributed to the second user by the first user to generate the first authentication use data.

6. A data processing method as set forth in claim 1, wherein the first step comprises a step of generating the first authentication use data by using a plurality of the key data related to a plurality of processing relating to the authenticating means respectively.

7. A data processing method as set forth in claim 6, wherein the first step comprises a step of generating the first authentication use data by using the key data related to a plurality of processing including the function of the authenticating means and the access to data held by the authenticating means respectively.

8. A data processing method as set forth in claim 3, wherein the first authentication use data is generated by using the single key data related to an access to a plurality of data module when the authenticating means holds a plurality of the data module as the data.

9. A data processing method as set forth in claim 1 further comprising:
a third step by which the means to be authenticated provides the key designation data to the authenticating means,
a fourth step by which the authenticating means generates the second authentication use data with the predetermined generation method by using the key data designated by the key designation data received in the third step,
a fifth step by which the means to be authenticated uses the first authentication use data and the authenticating means uses the second authentication use data generated in the fourth step, authentication is performed, and
a sixth step by which the authenticating means executes processing related to the key data in response to an indication from the means to be authenticated when the authenticating means judges that the first authentication use data and the second authentication use data are the same by the authentication in the fifth step.

10. A data processing method as set forth in claim 1, wherein the first step comprises a step of generating the first authentication use data by using the key data to encrypt predetermined data.

11. A data processing method as set forth in claim 1,
further comprising a third step of specifying the key data corresponding to a service designated by the means to be authenticated based on correspondence data of the service that is a use target of the means to be authenticated and single or a plurality of the key data related to processing relating to the authenticating means corresponding to the service, wherein
the first step comprises a step of generating the first authentication use data by using the key data specified in the third step.

12. A data processing method as set forth in claim 11, wherein the third step comprises a step of providing a screen making the means to be authenticated designate the service.

13. A program executed by a data processing device providing first authentication use data used for authentication by means to be authenticated to the means to be authenticated when authenticating means holding key data uses the key data designated by the means to be authenticated holding the first authentication use data for encryption to generate second authentication use data, uses the second authentication use data to authenticate with the means to be authenticated, and performs processing related to the key data conditional on confirming that the first authentication use data and the second authentication use data are the same due to the authentication, comprising:
a first step of generating the first authentication use data by using the key data related to the processing permitted to the means to be authenticated among processing relating to the authenticating means for the encryption, and
a second step of providing the first authentication use data generated in the first step and key designation data designating the key data used in the first step to the means to be authenticated.

14. A program as set forth in claim 13, wherein the first step comprises a step of generating the first authentication use data by using the key data related to function of the authenticating means permitted by the means to be authenticated or an access to data held by the authenticating means.

15. A data processing device providing first authentication use data used for authentication by means to be authenticated to the means to be authenticated when authenticating means holding key data uses the key data designated by the means to be authenticated holding the first authentication use data for encryption to generate second authentication use data, uses the second authentication use data to authenticate with the means to be authenticated, and performs processing related to the key data conditional on the authentication confirming that the first authentication use data and the second authentication use data are the same, comprising:
a first means for generating the first authentication use data by using the key data related to the processing permitted to the means to be authenticated among processing relating to the authenticating means for the encryption, and
a second means for providing the first authentication use data generated in the first means and key designation data designating the key data used in the first means to the means to be authenticated.
